(19) Europäisches Patentamt
European Patent Office
Office européen des brevets

(11) EP 2 775 124 A1

(12) EUROPEAN PATENT APPLICATION
published in accordance with Art. 153(4) EPC

(43) Date of publication:
10.09.2014 Bulletin 2014/37

(51) Int Cl.:
F02D 29/02 (2006.01)

(21) Application number: 11874985.2

(22) Date of filing: 01.11.2011

(86) International application number:
PCT/JP2011/075186

(87) International publication number:
WO 2013/065127 (10.05.2013 Gazette 2013/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(71) Applicant: Toyota Jidosha Kabushiki Kaisha
Toyota-shi, Aichi 471-8571 (JP)

(72) Inventor: SUGIHARA, Hiroyuki
Toyota-shi
Aichi 471-8571 (JP)

(74) Representative: TBK
Bavariaring 4-6
80336 München (DE)

(54) INTERNAL COMBUSTION ENGINE CONTROL DEVICE

(57) A control apparatus (100) of the present invention is a control apparatus for for an internal combustion engine (10) equipped with an idling stop mechanism (30) and a supercharger (14). The control apparatus is provided with: a controlling device (30) which is configured to detect atmospheric pressure and to change a threshold value of a parameter which allows idling stop processing to be performed by the idling stop mechanism, to a side on which the idling stop processing is not allowed, as the detected atmospheric pressure has a lower value, in order to suppress an excessive increase in temperature of a catalyst (16).

[FIG. 3]

**Description**

Technical Field

The present invention relates to a control apparatus for an internal combustion engine disposed in a vehicle such as, for example, an automobile.

Background Art

As this type of apparatus, there is proposed, for example, a control apparatus for an engine disposed in a hybrid vehicle, wherein the control apparatus is configured to stop the engine under the condition that an engine stop condition applies and that temperature of a purifying apparatus is less than or equal to a threshold value, and to continue the operation of the engine in ignition timing after engine start set in advance under the condition that the engine stop condition applies and that the temperature of the purifying apparatus is greater than the threshold value (refer to Patent document 1).

Alternatively, there is also proposed an apparatus which is configured not to stop an internal combustion engine if temperature of a catalyst in an exhaust gas purification catalyst converter is not less than or equal to a predetermined threshold value, for example, in an economic running vehicle or the like in which the operation of the internal combustion engine is stopped during travelling of the vehicle (refer to Patent document 2).

Alternatively, there is also proposed an apparatus which is configured to perform idling due to compressed self-ignition in which exhaust temperature is low when catalyst temperature is greater than or equal to a predetermined temperature set on the basis of oil water temperature and ambient temperature or the like and which is configured to automatically stop the idling when the catalyst temperature is less than the predetermined temperature, in a case where an automatic stop condition for the idling applies (refer to Patent document 3).

Prior Art Document

Patent Document

Patent document 1: Japanese Patent Application Laid Open No. 2007-309113
Patent document 2: Japanese Patent Application Laid Open No. 2003-239782
Patent document 3: Japanese Patent Application Laid Open No. 2002-188484

Disclosure of Invention

Subject to be Solved by the Invention

By the way, in the internal combustion engine with a turbocharger, energy inputted to a turbine of the turbocharger and the catalyst disposed on a downstream of the turbine increases in order to maintain output even in a highland in which the atmospheric pressure is relatively low. There is such a technical problem that the catalyst temperature excessively increases if the idling stop is performed in the highland; however, the aforementioned Patent documents 1 to 3 do not take the problem into account.

In view of the aforementioned problem, it is therefore an object of the present invention to provide a control apparatus for an internal combustion engine which is configured to suppress the excessive increase in catalyst temperature.

Means for Solving the Subject

The above object of the present invention can be solved by a control apparatus for an internal combustion engine equipped with an idling stop mechanism and a supercharger, said control apparatus is provided with a controlling device which is configured to detect atmospheric pressure and to change a threshold value of a parameter which allows idling stop processing to be performed by the idling stop mechanism, to a side on which the idling stop processing is not allowed, as the detected atmospheric pressure has a lower value.

According to the control apparatus of the present invention, the control apparatus controls the internal combustion engine equipped with the idling stop mechanism and the supercharger. The "idling stop mechanism" is a mechanism which stops the internal combustion engine by detecting the stop of a vehicle and which restarts the internal combustion engine by detecting a start operation of the vehicle. Since various known aspects can be applied to the idling stop mechanism, the explanation of the details of the idling stop mechanism is omitted.

The controlling device which is provided, for example, with a memory, a processor or the like detects the atmospheric pressure and changes the threshold value of the parameter which allows the idling stop processing to be performed by the idling stop mechanism, to the side on which the idling stop processing is not allowed, as the detected atmospheric pressure has a lower value.

According to the study of the present inventors, the following matter has been found; namely, catalyst warming-up control is performed during a cold period on a catalyst disposed in an exhaust passage of the internal combustion engine, in order to appropriately purify exhaust gas

In the highland in which the atmospheric pressure is relatively low, energy inputted to the catalyst decreases due to a reduction in intake air amount of an air flowing into the internal combustion engine, and it becomes difficult to activate the catalyst and to maintain the activation state of the catalyst. In particular, in the internal combustion engine having the idling stop mechanism, the internal combustion engine stops, relatively frequently, due to the execution of the idling stop processing, and thus, the activation of the catalyst or the like becomes more difficult.

Thus, in the highland, the catalyst warming-up control such as, for example, supplying a relatively high-temperature exhaust gas to the catalyst is performed, relatively frequently. In particular, in the internal combustion engine having the idling stop mechanism, the catalyst warming-up control is performed during the travelling of the vehicle. Thus, depending on the operation of the driver of the vehicle (e.g. an accelerator operation, etc.), there is a possibility that energy more than expected is supplied to the catalyst and that the temperature of the catalyst excessively increases.

In the present invention, however, as described above, the threshold value of the parameter which allows the idling stop processing to be performed is changed by the controlling device to the side on which the idling stop processing is not allowed, as the detected atmospheric pressure has a lower value.

Thus, since the execution frequency of the idling stop processing decreases, a reduction in catalyst temperature is suppressed, and thus, the execution frequency of the catalyst warming-up control decreases. As a result, the excessive increase in catalyst temperature can be suppressed. In addition, since the execution frequency of the catalyst warming-up control decreases, deterioration of fuel efficiency can be suppressed. Moreover, since the reduction in catalyst temperature is suppressed, deterioration of emission can be suppressed.

In one aspect of the control apparatus of the present invention, the parameter is temperature of a catalyst disposed in an exhaust passage of the internal combustion engine equipped with the supercharger.

According to this aspect, the excessive increase in catalyst temperature can be preferably suppressed.

The operation and other advantages of the present invention will become more apparent from an embodiment explained below.

Brief Description of Drawings

[FIG. 1] FIG. 1 is a block diagram illustrating a configuration of a vehicle in an embodiment.
[FIG. 2] FIG. 2 is one example of a map illustrating a relation between the atmospheric pressure and catalyst bed temperature at which engine stop is executed.
[FIG. 3] FIG. 3 is a flowchart illustrating engine stop determination processing performed by an ECU in the embodiment.

Mode for Carrying Out the Invention

Hereinafter, an embodiment of the control apparatus for the internal combustion engine of the present invention will be explained with reference to the drawings.

(Configuration of Internal Combustion Engine)

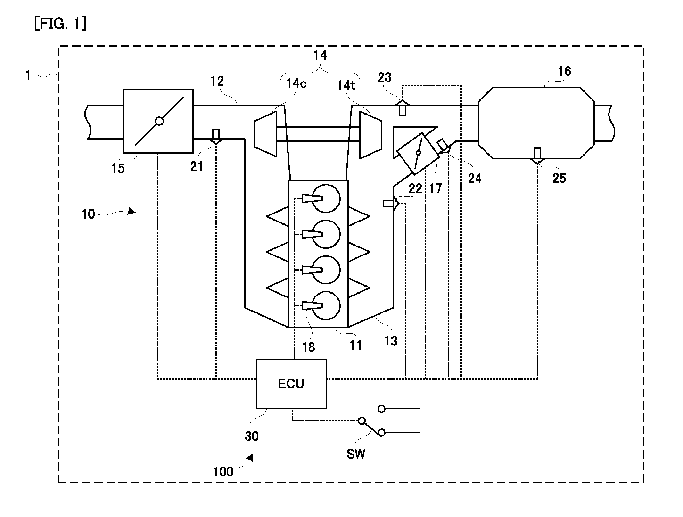

A configuration of the internal combustion engine in the embodiment will be explained with reference to FIG. 1. FIG. 1 is a block diagram illustrating the configuration of the vehicle in the embodiment.

In FIG. 1, an internal combustion engine 10 is disposed in a vehicle 1 such as, for example, an automobile. The internal combustion engine 10 is provided with a main body 11 having a plurality of cylinders, an intake passage 12 and an exhaust passage 13 each of which is connected to the main body 11, a turbocharger having a compressor 14c disposed in the intake passage 12 and a turbine 14t, a valve 15 which is disposed in the exhaust passage 13 and which is configured to adjust an air amount (i.e. an intake amount) of an air which flows into the intake passage 12, a catalyst 16 disposed in the exhaust passage 13, a valve 17 which is disposed in the exhaust passage 13 and which is configured to adjust exhaust gas distribution to the turbocharger 14, and an injector 18 which is configured to adjust a fuel amount of fuel which is supplied to each of the plurality of cylinders.

The intake passage 12 of the internal combustion engine 10 is provided with a sensor 21 which is configured to measure the intake amount. The exhaust passage 13 of the internal combustion engine 10 is provided with a sensor 22 which is configured to measure an air/fuel ratio, a sensor 23 which is configured to measure temperature of an exhaust gas which has passed through the turbocharger 14, a sensor 24 which is configured to measure temperature of an exhaust gas which has not passed through the turbocharger 14, and a sensor 25 which is configured to detect catalyst bed temperature of the catalyst 16.

An electronic control unit (ECU) 30 of the vehicle 1 controls the injector 18 and the various valves 15 and 17 in accordance with signals outputted from the various sensors 21, 22, 23, 24 and 25. The ECU 30 controls a switch SW for changing a driving mode such as, for example, "an urban area mode (in which the number of revolutions and the load of the internal combustion engine 10 are relatively low: low revolution low load)" and "a high speed mode (in which the number of revolutions and the load of the internal combustion engine 10 are relatively high: high revolution high load)" depending on a state of the vehicle 1.

Particularly in the embodiment, the ECU 30 stops the internal combustion engine 10 by detecting the stop of the vehicle 1, and restarts the internal combustion engine 10 by detecting a start operation of the vehicle 1 (e.g. a state in which the amount of stepping on a brake pedal, or other states). In other words, the ECU 30 is configured to perform idling stop processing.

The "turbocharger 14" and the "ECU 30" in the embodiment are one example of the "supercharger" and the "idling stop mechanism" of the present invention, respectively.

(Configuration of Control Apparatus)

A control apparatus 100 in the embodiment is provided with the ECU 30 as one example of the "controlling device" of the present invention, wherein the ECU 30 detects the atmospheric pressure and changes a threshold value of a parameter which allows the idling stop processing to be performed, to a side on which the idling stop processing is not allowed, as the detected atmospheric pressure has a lower value. In other words, in the embodiment, one portion of various functions of the ECU 30 for electronic control of the vehicle 1 is used as at least one portion of the control apparatus 100.

Specifically, the ECU 30 changes the threshold value of the parameter which allows the idling stop processing to be performed (or "$T_{h\_on}$" which is a threshold value of the catalyst bed temperature), by using the following equations (1) to (3).

[Equation 1]

$$\frac{T_{h\_on} - T_{sc}}{T_{l\_on} - T_{sc}} = \frac{Q_{h\_in} - Q_{h\_out}}{Q_{l\_in} - Q_{l\_out}}$$

$$(1)$$

[Equation 2]

$$Q_{h\_in} = Ga \times A/F \times \Delta Q$$

$$(2)$$

[Equation 3]

$$Q_{h\_out} = (Q_{out\_NA} \times (1 - WGV) + Q_{out\_TC} \times WGV) \times P_h / P_l$$

$$(3)$$

wherein "$T_{h\_on}$", "$T_{l\_on}$", "$T_{sc}$", "$Q_{h\_in}$", "$Q_{h\_out}$", "$Q_{l\_in}$", "$Q_{l\_out}$", "Ga", "A/F", "$\Delta Q$", "$Q_{out\_NA}$",C "$Q_{out\_TC}$", "WGV", "$P_h$" and "$P_l$" are "engine stop execution bed temperature (K) in a highland", "engine stop execution bed temperature (K) in a flatland", "catalyst activation temperature (K)", "engine calorific value (J) in a highland", "engine heat release value (J) in a highland", "engine calorific value (J) in a flatland", "engine heat release value (J) in a flatland", "engine input air amount (g)", "air/fuel ratio", " calorific value per unit fuel (J/g)", "exhaust heat release value of a passage which does not pass through the turbocharger", "exhaust heat release value of a passage which passes through the turbocharger", "exhaust amount ratio of the passage which passes through the turbocharger", "atmospheric pressure (kPa) in a highland", and "atmospheric pressure (kPa) in a flatland", respectively. A mark in parentheses represents a unit.

The "flatland" in the embodiment means an area in which the atmospheric pressure is about 1 atm. On the other hand, the "highland" in the embodiment means an area in which the atmospheric pressure is to the extent that the amount of an intake air to the internal combustion engine 10 is influenced.

Each of the engine stop execution bed temperature in the flatland $T_{l\_on}$, the engine calorific value in the flatland $Q_{l\_in}$, the engine heat release value in the flatland $Q_{l\_out}$, and the engine calorific value in the highland $Q_{h\_in}$ is a default value obtained in advance, for example, by experiments and simulations or the like. Each of the catalyst activation temperature $T_{sc}$ and the calorific value per unit fuel $\Delta Q$ is a fixed value.

The engine input air amount Ga is calculated or estimated on the basis of the signal outputted from the sensor 21. The exhaust heat release value of the passage which does not pass through the turbocharger $Q_{out\_NA}$ is calculated or estimated on the basis of the signal outputted from the sensor 24. The exhaust heat release value of the passage which passes through the turbocharger $Q_{out\_TC}$ is calculated or estimated on the basis of the signal outputted from the sensor 23. The exhaust amount ratio of the passage which passes through the turbocharger WGV is calculated or estimated on the basis of an opening degree of the valve 17. The air/fuel ratio A/ F is measured by the sensor 22.

Each of the atmospheric pressure $P_l$ in the flatland and the atmospheric pressure $P_h$ in the highland is estimated on the basis of a correlation between the opening degree of the valve 15 and the intake amount indicated by the signal outputted from the sensor 21. Here, the atmospheric pressure $P_l$ in the flatland is obtained in advance when the vehicle 1 drives in the flatland (i.e. before the vehicle 1 arrives at the highland). Since various known aspects can be applied to a method of estimating the atmospheric pressure, the explanation of the details of the method is omitted.

The ECU 30 performs the idling stop processing if the catalyst bed temperature of the catalyst 16 is greater than the calculated engine stop execution bed temperature in the highland $T_{h\_on}$. On the other hand, the ECU 30 forbids the idling stop processing if the catalyst bed temperature of the catalyst 16 is less than the calculated engine stop execution bed temperature in the highland $T_{h\_on}$. A case where the catalyst bed temperature of the catalyst 16 is equal to the calculated engine stop execution bed temperature in the highland $T_{h\_on}$ may be included in either one of cases.

Here, the catalyst bed temperature may use a value measured by the sensor 25, or may be estimated from, for example, exhaust temperature and the exhaust amount ratio of the passage which passes through the turbocharger WGV. Since various known aspects can be applied to a method of estimating the catalyst bed temperature, the explanation of the details of the method is omitted.

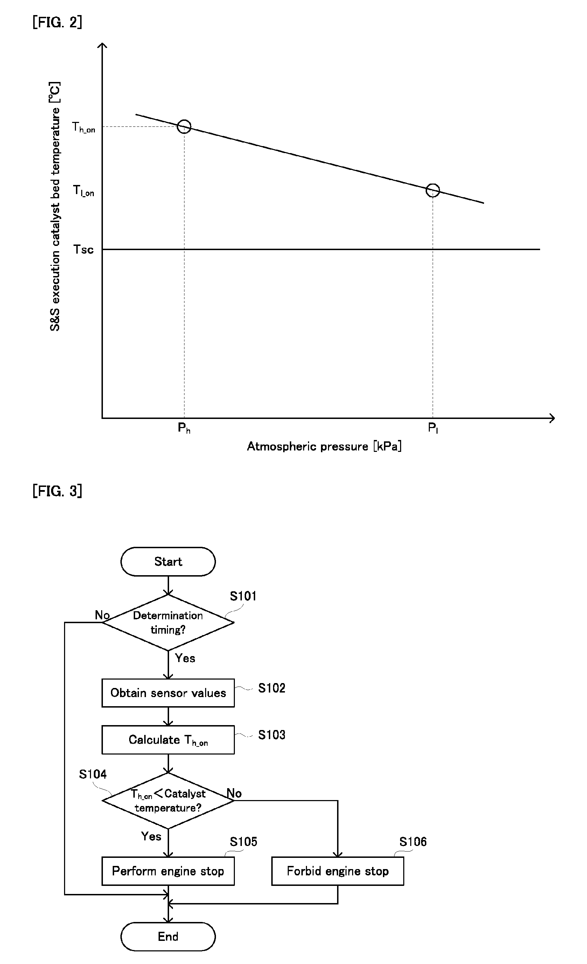

In a relation between the calculated engine stop execution bed temperature in the highland $T_{h\_on}$ and the atmospheric pressure, for example, as illustrated in FIG. 2, the value of the engine stop execution bed temperature in the highland $T_{h\_on}$ increases as the atmospheric pressure decreases. Thus, it becomes more difficult for the catalyst bed temperature to be greater than the engine stop execution bed temperature in the highland $T_{h\_on}$ (i.e. the threshold value) as the atmospheric pressure decreases. As a result, the idling stop processing is hardly performed as the atmospheric pressure decreases. Incidentally, FIG. 2 is one example of a map illustrating the relation between the atmospheric pressure and the catalyst bed temperature at which the engine stop is executed.

(Engine Stop Determination Processing)

Next, engine stop determination processing performed by the ECU 30 as one portion of the control apparatus 100 as configured above during the travelling or stop of the vehicle 1 will be explained with reference to a flowchart in FIG. 3.

In FIG. 3, firstly, the ECU 30 determines whether or not it is timing to perform the engine stop determination (step S101). If it is determined that it is not the timing to perform the engine stop determination (the step S101: No), the processing is ended. On the other hand, if it is determined that it is the timing to perform the engine stop determination (the step S101: Yes), the ECU 30 obtains values which are indicated by the signals outputted from the various sensors (step S102).

Incidentally, the ECU 30 may determine whether or not it is timing to perform the engine stop determination by determining whether or not a predetermined time has passed since the previous engine stop determination was performed.

Then, the ECU 30 calculates the engine stop execution bed temperature in the highland $T_{h\_on}$ by using the aforementioned equations (1) to (3) (step S103). Then, the ECU 30 determines whether or not the measured or estimated catalyst bed temperature is greater than the calculated engine stop execution bed temperature in the highland $T_{h\_on}$

(step S104).

If it is determined that the measured or estimated catalyst bed temperature is greater than the calculated engine stop execution bed temperature in the highland $T_{h\_on}$ (the step S104: Yes), the ECU 30 allows the idling stop processing (i.e. engine stop when the vehicle 1 stops) to be performed (step S105). On the other hand, if it is determined that the measured or estimated catalyst bed temperature is lower than the calculated engine stop execution bed temperature in the highland $T_{h\_on}$ (the step S104: No), the ECU 30 forbids the idling stop processing (step S106).

Incidentally, the engine stop execution bed temperature in the highland $T_{h\_on}$ may be corrected by using a coefficient obtained from a learned driving pattern of a driver of the vehicle 1 (e.g. an accelerator operation of the driver during a catalyst warming-up period, etc.), a coefficient associated with obtained information regarding a driving route of the vehicle 1 (e.g. a signal interval, a road surface slope, traffic congestion information, etc.), or the like.

The present invention can be applied not only to a vehicle which is provided with the idling stop mechanism but also a hybrid vehicle.

The present invention is not limited to the aforementioned embodiment, but various changes may be made, if desired, without departing from the essence or spirit of the invention which can be read from the claims and the entire specification. A control apparatus for an internal combustion engine, which involves such changes, is also intended to be within the technical scope of the present invention.

Description of Reference Codes

1       vehicle
10      internal combustion engine
11      main body
12      intake passage
13      exhaust passage
14      turbocharger
16      catalyst
30      ECU
100     control apparatus

**Claims**

1.  A control apparatus for an internal combustion engine equipped with an idling stop mechanism and a supercharger, said control apparatus comprising:

    a controlling device which is configured to detect atmospheric pressure and to change a threshold value of a parameter which allows idling stop processing to be performed by the idling stop mechanism, to a side on which the idling stop processing is not allowed, as the detected atmospheric pressure has a lower value.

2.  The control apparatus according to claim 1, wherein the parameter is temperature of a catalyst disposed in an exhaust passage of the internal combustion engine equipped with the supercharger.

[FIG. 1]

[FIG. 2]

[FIG. 3]

<table>
<tr><td colspan="2" align="center">**INTERNATIONAL SEARCH REPORT**</td><td colspan="2">International application No.<br>PCT/JP2011/075186</td></tr>
</table>

**A. CLASSIFICATION OF SUBJECT MATTER**
*F02D29/02*(2006.01)i

According to International Patent Classification (IPC) or to both national classification and IPC

**B. FIELDS SEARCHED**

Minimum documentation searched (classification system followed by classification symbols)
F02D29/02

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2005-003004 A (Denso Corp.),<br>06 January 2005 (06.01.2005),<br>paragraphs [0008] to [0009]<br>(Family: none) | 1<br>2 |
| X<br>A | JP 2001-050076 A (Denso Corp.),<br>23 February 2001 (23.02.2001),<br>paragraphs [0010] to [0011]<br>(Family: none) | 1<br>2 |
| X<br>A | JP 2000-337189 A (Toyota Motor Corp.),<br>05 December 2000 (05.12.2000),<br>paragraph [0008]<br>(Family: none) | 1<br>2 |

☐ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>25 November, 2011 (25.11.11) | Date of mailing of the international search report<br>06 December, 2011 (06.12.11) |
|---|---|
| Name and mailing address of the ISA/<br>　Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007309113 A
- JP 2003239782 A
- JP 2002188484 A